# EUROPEAN PATENT APPLICATION

(11) **EP 1 938 941 A1**
(43) Date of publication of application: **02.07.2008**
(21) Application number: 06026932.1
(22) Date of filing: 27.12.2006
(51) Int. Cl.: B29C 41/04

(54) **Rotational moulding process of metallocene polymers or copolymers having a low melting point and a low melt viscosity**

(71) Applicant: Clariant International Ltd., 4132 Muttenz (CH)
(72) Inventor: Fell, Rainer, Dr., 86368 Gersthofen (DE); Diem, Herrmann, 86517 Wehringen (DE); Koch, Hermann, Uxbridge, Ontario, L9P 1R4 (CA); Vlachopoulos, John, Prof.Dr., L7S 21H8 Burlington, Ontario (CA); Takacs, Elizabeth S., Dundas, L9H 3X1, Ontario (CA); Halim, Silvie Maria Tanu, Dundas, L9H 3X1, Ontario (CA)
(74) Representative: Mikulecky, Klaus

(57) **Abstract**

The invention is related to a rotational moulding process of propylene and ethylene polymers or copolymers having a low melting point and a low melt viscosity produced by metallocene catalysis.

## Description

The invention is related to a rotational moulding process of propylene and ethylene polymers or copolymers having a low melting point and a low melt viscosity, produced by metallocene catalysis. The invention is also related to blends of these low melt viscosity polymers with conventional polyethylene types that are commonly used in the rotational moulding process.
Rotational moulding is a cost effective process to produce medium to large sized hollow parts from plastics. Because of the special nature of the rotational molding process as pressure and shear force free process, the type of materials could be used in the process are so far mainly limited to polyethylenes. During the process usually very fine plastic powder is loaded into a slit, hollow metal mould. The mold is rotated biaxially while it is heated. The rotation is relatively slow. As the mold temperature increases the powder starts to melt and sticks on the mold surface. A proper rotation ratio ensures a uniform melt covering of the mold surface. The mold is cooled while still in biaxial rotation. The final part is removed after the mold has reached a safe handling temperature.
The properties of the final article can be influenced by the choice of the plastic material used as raw material, the plastic powder characteristics and the process parameters, such as heating temperature, heating time, cooling time and other conditions. Especially the sintering behavior respective the rheological characteristics are very important parameters of the polymers.
Conventional good moulding resins for rotational moulding should satisfy, among others, the following criteria:
- Low melt viscosity to permit sintering
- High surface tension to facilitate sintering
- Low melt elasticity to accelerate sintering and to maximalize bubble removal
- Good mechanical properties
- Easy flowing particles, substantially spherical in shape.
- High bulk density to provide good flowability and close compaction in the mould. According to the conventional prior art, the polyethylene polymers for rotational moulding have been prepared by melt compounding the polymerization reactor product with additives, and grinding it to proper particle size. The grinding operation is costly due to high energy consumption and it is an additional step.
   Earlier studies [M. Kontopoluo and J. Vlachopoulos,Pol. Eng. Sci., February, 2001, Vol. 41, No.2.] showed the relative importance of the powder characteristics and the material rheological properties on the melt densification process. The initial size of the bubbles formed in the melt is primarily controlled by the powder particle size and packing arrangement. This observation highlights the importance of the powder quality in both, the molding cycle and the quality of the final product. Particle size, particle size distribution has significant effect on the rotomoldability of the powder. Coarse particles lead to increase in the cycle time or surface defect. Fine particles result in good surface and enhance heat transfer. However, too many fine particles could cause problem during rotational molding. For example, it can form agglomerations due to build-up of static or can bridge the complex channels. Also, fine particles tend to have more irregularities and tails which will result in poor packing. Therefore, the generally accepted powder size distribution for rotational molding is from -35 to + 100 mesh size (150 to 500 □m).

Since 1980s the metallocene catalyst technology had been used for producing polyolefin based polymers for different polymer processes including rotational molding. The invention of the new catalyst system opened possibilities in polymerizations, co-polymerizations and tailoring the molecular structure of the different polyolefins, which resulted in new polymers with low melt viscosity, low melting point, sharper melting peak, narrow molecular weight distribution, better processability.

The metallocene polyethylene resin that is produced in a polymerization reactor is in such a form, that it can be used without any additional compounding and grinding for rotational moulding processes as described in US 2001/0,025,092. The process could be controlled to give good particle size and good morphology of the polymer. But even if energy consuming operations like compounding and grinding, could be reduced, the rotational moulding process has to be performed at higher temperatures and therefore energy consuming.

However, all materials described have the drawback that they have to be used as a powder with a defined particle size that makes the preparatory work of the rotational moulding process complex and expensive.

The objective of the invention is a rotational moulding process that is more robust concerning the particle size of the polymers used for the process. The process should be optimized by the use of polymers with a low melting point and therefore be also bevery economic concerning energy consumption and short cycle times.

The above objectives could be achieved by a rotational molding process of polymers or copolymers, wherein the polymers employed are propylene and/or ethylene polymers or copolymers having a melting point in the range from 50 to 160°C and a melt viscosity at 140 to 170°C in the range from .01 to 25 Pa.s and are preferably produced by metallocene catalysis. It was found that the low melt viscosity polymers could be used for the rotational moulding process in form of regular sized pellets (e.g. about 1 to 4mm in diameter). Therefore, the grinding step or milling process could be completely avoided. Due to this fact, the rotational molding process is simplified and could be more economical, due to a very low energy consumption compared to a process using state-of-the-art polymers. The use of low melt viscosity polymers in rotational moulding would result in short cycle times.

It was found that low melt viscosity polymers produced by metallocene catalysis have excellent properties in polymer sintering that gives an excellent short time for coalescence in the rotational moulding process. For example, the sintering time for TP Licocene® polymer was calculated to be between 49 sec and 112 sec compared to 720 sec for a state-of-the-art polymer.

The low melt viscosity (1.8 mPa.s to 7 Pa.s for TP Licocene® polymer compared to 4800 Pa.s for a state-of-the-art polymer) and relatively high surface tension (21.5 mJ/m2 at 105°C to 24.0 mJ/m2 at 105°C for TP Licocene® polymer compared to 24.66 mJ/m2 at 170°C for a state-of-the-art polymer) of the TP Licocene® polymers, in combination with the low melting point (DSC-measurement: 68°C to 99°C for TP Licocene® polymer compared to 128°C for a state-of-the-art polymer), lead to a rotational moulding process that is characterized by low energy consumption and shorter cycle times.
The mechanical properties of the molded products are distinguished by high values in elongation and reasonable values in Young modulus and tensile strength.
For example, the elongation at break for TP Licocene® polymer was up to 1065 % compared to 790% for a state-of-the-art polymer. For the young modulus 225 MPa have been reached with TP Licocene® polymers, for the maximum stress 11.9 MPa.

According to the invention the propylene and ethylene polymers or copolymers described above can be achieved by using metallocene catalysts for the polymerization of propylene and ethylene that lead to a low melting point, a low melt viscosity and a narrow molecular weight distribution.

In a preferred embodiment of the invention new low melt viscosity polymers are employed as modifiers, for altering the processability of the rotomolding grade polyethylene. Dry and melt blends of these low melt viscosity polymers with conventional polyethylenes (common in rotational moulding) showed significant reduction of sintering time (e.g. from 720 sec for a state-of-the-art polymer to 280 sec by adding 10wt% of TP Licocene® PP 2602 in dry blend or to 220 sec by adding 25wt% of TP Licocene® PP 2602 in dry blend), while maintaining reasonable tensile properties. This means that using low melt viscosity polymers as modifiers in the rotational molding process, energy consumption as well as cycle times could be reduced, as compared to pure state-of-the-art polymers.
If the low melt viscosity polymers are used as modifiers the ratio of TP Licocene® polymer may comprise up to 80 by weight, preferably up to 50% by weight, more preferably up to 30% by weight, based on the total content.

The new polyolefin family employed as pure material and as modifiers for the rotational molding process is developed by using metallocene catalyst technology. The family of polymers includes polypropylenes and polyethylenes and copolymers of propylene and/or ethylene and or higher 1-olefins. These low melt viscosity and low melting point resins have already been successfully used as dispersing aids for pigments in plastics as well as in adhesives and sealants (WO-0164800, DE-10323617).

According to the invention, propylene and ethylene polymers or copolymers of propylene and ethylene are suitable for the rotational moulding process, especially slash molding. They have a controlled low melting point and a low melt viscosity. The polyolefins prepared by means of metallocene catalysts, where the polyolefins are homopolymers of propylene, ethylene or copolymers of propylene and ethylene or copolymers of propylene or/and ethylene with one or more 1-olefin may be linear or branched, substituted or unsubstituted and have 4-18 carbon atoms.
The 1-olefins preferably have 4-6 carbon atoms. Examples are 1-butene, 1-hexene, 1-octene and 1-octadecene, also styrene. Preference is given to copolymers of ethylene, propylene or/and 1-butene. The copolymers have an ethylene or propylene content of 60-99.9% by weight, preferably 70-99% by weight, based on the total content.

If the 1-olefins are substituted, the substituent is preferably an aromatic radical which is conjugated with the double bond of the 1-olefin.
Particularly suitable polyolefins are those having a melting point in the range from 50 to 160°C, preferably from 60 to 140°C, in particular from 65 to 120°C, and a melt viscosity at 140°C -170°C in the range from 0.010 to 25 Pa.s, preferably from 1 to 10 Pa.s and a density at 20°C in the range from 0.85 to 1.20 g/cm3, preferably from 0.87 to 0.97 g/cm3.

Metallocene catalysts for preparing the polyolefin waxes are chiral or nonchiral transition metal compounds of the formula M1Lx. M1 is preferably an element of main group III, IV, V or VI of the Periodic Table of the Elements, e.g. Ti, Zr or Hf. Lx symbolizes the ligand. The transition metal compound M1Lx contains at least one central metal atom M1, to which at least one π-ligand, e.g. a cyclopentadienyl ligand, is bound. In addition, substituents such as halogen atoms or alkyl, alkoxy or aryl groups may be bound to the central metal atom M1. For the purposes of the present invention, cyclopentadienyl ligands are unsubstituted cyclopentadienyl radicals and substituted cyclopentadienyl radicals such as methylcyclopentadienyl, indenyl, 2-methylindenyl, 2-methyl-4-phenylindenyl, tetrahydroindenyl or octahydrofluorenyl radicals. The π-ligands can be bridged or unbridged, with single and multiple bridges, including bridges via ring systems, being possible. The term metallocene also encompasses compounds having more than one metallocene fragment, known as multinuclear metallocenes. These can have any substitution patterns and forms of bridging. The individual metallocene fragments of such multinuclear metallocenes can be either of the same type or different from one another. Examples of such multinuclear metallocenes are described, for example, in EP 0632 063, which is hereby incorporated by reference.
Examples of structural formulae of metallocenes and of their activation by means of a cocatalyst are given, inter alia, in EP 571 882, which is hereby also incorporated by reference.
Apart from nonpolar metallocene polyolefins, it is also possible to use their derivatives obtained by polar modification. The modification is carried out, for example, by oxidation using oxygen or oxygen-containing gases or by grafting with polar monomers, for example maleic acid or its derivatives.

The metallocene low melt viscosity polyolefins can be incorporated to the rotational moulding process as powder, granules or in liquid form from a heated reservoir and can be added in various forms to a plastic used in the rotational moulding process. They can be used as a powder blend or melt blend together with other additives: If appropriate the metallocene low melt viscosity polymer may comprise up to 99% by weight of another wax or resin, preferably up to 95% by weight of another wax or resin, based on the total content.

Moreover the low melt viscosity polymer can further comprise one or more of the following additives:
a) if appropriate, up to 20% by weight of light stabilizers,
b) if appropriate, up to 20% by weight of an antioxidant,
c) if appropriate, up to 50% by weight of flame retardants,
d) if appropriate, up to 10% by weight of heat stabilizers,
e) if appropriate, up to 10% by weight of UV absorbers,
f) if appropriate, up to 10% by weight of antistatic,
g) if appropriate, up to 20% by weight of lubricants,
h) if appropriate, up to 50% by weight of a pulverulent filler insoluble in the metallocene polyolefin,
i) if appropriate, up to 50% by weight of a colorant substance, e.g. a pigment or a soluble dye
j) if appropriate, up to 10% by weight of processing aids and
k) if appropriate, up to 50% by weight of other active substances.

The low melt viscosity polyolefins described can be used as constituents of additive mixtures.

The inventive rotational moulding process preferably uses material also material mixtures composed of conventional ethylene polymer types that are in use in the rotational moulding processes with the described low melt viscosity polymers.
The low melt viscosity polyolefins are preferably used in powdered or micronized form in mixtures of predominantly pulverulent starting materials to optimize dispersion.

The invention is illustrated via the examples below but is not restricted thereto.

### Examples:

The rheological properties of the selected resins were measured by using an ARES rotational rheometer (TA Instruments) with parallel plate geometry in dynamic oscillatory mode, testing over the range of 0.1-100 rad/sec. The low melt viscosity polymer samples for the rheological tests were compression molded at 110°C into a disc with 25mm diameter and 2 mm height. The dynamic viscosity were obtained from the dynamic oscillatory measurements.

The thermal properties of the resins were investigated by using a TA 2100 Differential Scanning Calorimeter (DSC). The heating and cooling rates were 10°C/min in the two heating and cooling cycles. The purpose of the first heating cycle was to eliminate the heat history of the resins. The temperature ranged from -25 to 125°C. The melting temperature was determined as a peak temperature.
The dropping points of the resins were obtained according to DIN 51 801/2, ASTM D 127.

The surface tension was obtained by using an experimental setup developed at McMaster University, Hamilton, Canada.

The sintering experiments (particle coalescence) were conducted by using a heat chamber equipped with an optical microscope.

Tensile properties were obtained from the rotomolded parts by using Instron tensile tester (Model 3366) according the ASTM D638-90 test (Type M-III). 5 kN load cell was used and the speed of testing was 50 mm/min. The tensile strength at yield, Young modulus and percent elongation at break were calculated.

The uniaxial rotational molding experiments were performed on a costume made laboratory scale uniaxially rotating machine. The oven temperature was 300°C in case of TP Licocene® polymer granulates and 406°C for the TP Licocene® PP polymer powder samples (1502, 2602) and for the TP Licocene® PP polymer / LLDPE dry blended powder samples. The mold speed was 4 and 8 rpm respectively. Four rpm is common major axis speed in biaxial rotational molding. A fan was used to cool the mold during the cooling cycle. In all experiments the shot weight was 100g.

The biaxial rotational molding experiments were performed on a laboratory scale biaxial rotomolding machine (Wensley Mini-Oven Inc.). The machine consisted of an electrically heated mini-oven, a cooling chamber and 2 cube shaped, Teflon coated molds with dimensions of 13x13x13 cm. The oven temperature was set to 250°C for the low melt viscosity TP Licocene® polymer samples and 300°C for the LLDPE reference sample. The molds were heated for 9 minutes. Upon the completion of the heating cycle, the molds were shifted to the cooling chamber, where they were cooled down by using three stages of cooling. The first stage involved forced air, the second stage a light water mist and the third one again the forced air.

### Substances employed

| | |
|---|---|
| PP polymer: | TP Licocene® PP 1502 |
| PP polymer: | TP Licocene® PP 1602 |
| PP polymer: | TP Licocene® PP 2602 |
| PP polymer: | TP Licocene® PP 3502 |
| PP polymer: | TP Licocene® PP 4202 |

| | |
|---|---|
| PE polymer: | TP Licocene® PE 4201 |
| PE polymer: | TP Licocene® PE 3401 |

The manufacturer of the polymers is Clariant Produkte (Deutschland) GmbH.

| | |
|---|---|
| LLDPE polymer: | Escorene LL-8460.29 with a MFI of 3.3 g/10 min |
| (190°C/2.16 kg) and a density of 0.938g/cm3, from Exxon Mobil. | |

### Examples and measurements

### Material properties

| Density: | |
|---|---|
| TP Licocene® PP 1502 | 0.88 g/cm<3> |
| TP Licocene® PP 1602 | 0.88 g/cm<3> |
| TP Licocene® PP 2602 | 0.89 g/cm<3> |
| TP Licocene® PP 3502 | 0.89 g/cm<3> |

| Drop point: | |
|---|---|
| TP Licocene® PP 1502 | app. 90°C |
| TP Licocene® PP 1602 | app. 90°C |
| TP Licocene® PP 2602 | app. 100°C |
| TP Licocene® PP 3502 | app. 110°C |

| Melting point according to DSC (2nd run) | |
|---|---|
| TP Licocene® PP 1502 | app. 77°C |
| TP Licocene® PP 1602 | app. 68°C |
| TP Licocene® PP 2602 | app. 87°C |
| TP Licocene® PP 3502 | app. 99°C |

| | |
|---|---|
| Compared with Escorene LL-8460.29 | app. 128°C |

| Dynamic viscosity at 170°C: | |
|---|---|
| TP Licocene® PP 1502 | app. 1.8 Pa.s |
| TP Licocene® PP 1602 | app. 7.0 Pa.s |
| TP Licocene® PP 2602 | app. 6.0 Pa.s |
| TP Licocene® PP 3502 | app. 1.8 Pa.s |

| | |
|---|---|
| Compared with Escorene LL-8460.29 | app. 4800 Pa.s |

Measurement of melt deposition and densification phenomenon (sintering time) (Calculated sintering time by using an empirical model called First Order Response)

| | |
|---|---|
| TP Licocene® PP 1502 | 72 sec |
| TP Licocene® PP 1602 | 49 sec |
| TP Licocene® PP 2602 | 84 sec |
| TP Licocene® PP 3502 | 112 sec |

Compared with

| | |
|---|---|
| Escorene LL-8460.29 | 720 sec |

Measurement of the surface tension at 105°C:

| | |
|---|---|
| TP Licocene® PP 1502 | 23.0 mJ/m2 |
| TP Licocene® PP 1602 | 22.6 mJ/m2 |
| TP Licocene® PP 2602 | 24.0 mJ/m2 |
| TP Licocene® PP 3502 | 21.5 mJ/m2 |

Compared with

| | |
|---|---|
| Escorene LL-8460.29 | 24.66 mJ/m2 at 170°C |

### Uniaxial rotational molding of TP Licocene® PP granulates

Rotational molding experiments of the TP Licocene® PP resins in pellet form were performed on the uniaxial rotomolding machine. The comparison of the time reaching the maximum temperature in the center of the mold at 4 and 8 rpm and oven temperature 300°C respectively is given.

Comparison of time reaching the max. temperature inside the mold at 4 RPM:

| | |
|---|---|
| TP Licocene® PP 1502 | 13 min (95°C) |
| TP Licocene® PP 1602 | 13.5 min (95°C) |
| TP Licocene® PP 2602 | 18.5 min (116°C) |
| TP Licocene® PP 3502 | 16.5 min (108°C) |

Comparison of time reaching the max. temperature inside the mold at 8 RPM:

| | |
|---|---|
| TP Licocene® PP 1502 | 13 min (89°C) |
| TP Licocene® PP 1602 | 13.5 min (95°C) |
| TP Licocene® PP 2602 | 18 min (114°C) |
| TP Licocene® PP 3502 | 16.5 min (109°C) |

Increasing the rpm from 4 to 8 significantly helped to reduce the "melt drop off' phenomenon.
Inspection of the molded parts showed that the thickness uniformity also improved by increasing the rpm from 4 to 8 rpm

### Uniaxial rotational molding of TP Licocene® PP powder

Uniaxial rotation molding experiments were performed by using TP Licocene® 1502 and TP Licocene® 2602 resins in powder form (oven temperature was 406°C). Visual observations showed that both molded parts produced semi transparent products. TP Licocene® 1502 powder showed better flow behavior (no holes) and lesser bubbles in the molded samples than the pellets.
Similar trend was observed in case of TP Licocene® 2602.

### Biaxial rotational molding of TP Licocene® PP granulates

Biaxial rotomolding experiments were carried out on the TP Licocene® polymer granulates at different molding conditions to determine the proper molding parameters (250 g polymer; 250°C oven temperature; oven duration 9 min; rev. 30 sec; air coolant 6 min; water coolant 4 min and air coolant 4 min).

Visual inspection showed that boxes were rotomolded successfully using the above conditions based on the thickness uniformity. Results showed that 250°C oven temperature, 9 minutes heating time and overall 14 minutes cooling time resulted in good rotomolded boxes.

The comparison with Escorene LL-8460.29 was rotomolded at 300°C at the same cycle time.

Maximum stress for TP Licocene® polymer biaxially molded samples:

| | |
|---|---|
| TP Licocene® PP 1502 | 6.1 MPa |
| TP Licocene® PP 1602 | 6.0 MPa |
| TP Licocene® PP 2602 | 11.9 MPa |
| TP Licocene® PP 3502 | 11.9 MPa |

Compared with

| | |
|---|---|
| Escorene LL-8460.29 | 20.4 MPa |

Elongation at break for TP Licocene® polymer biaxially molded samples:

| | |
|---|---|
| TP Licocene® PP 1502 | 380 % Elongation |
| TP Licocene® PP 1602 | 1020 % Elongation |
| TP Licocene® PP 2602 | 1065 % Elongation |
| TP Licocene® PP 3502 | 53 % Elongation |

Compared with

| | |
|---|---|
| Escorene LL-8460.29 | 790 % Elongation |

Young modulus for TP Licocene® polymer biaxially molded samples:

| | |
|---|---|
| TP Licocene® PP 1502 | 40 MPa |
| TP Licocene® PP 1602 | 25 MPa |
| TP Licocene® PP 2602 | 100 MPa |
| TP Licocene® PP 3502 | 225 MPa |

Compared with

| | |
|---|---|
| Escorene LL-8460.29 | 510 MPa |

Blends of TP Licocene® PP 1502, TP Licocene® PP 2602 and LLDPE Escorene LL-8460.29

Study the coalescence of dry blended and melt blended samples Measurement of melt deposition and densification phenomenon (sintering time)

Dry blends and melt blends of 5, 10 and 25 weight % TP Licocene® PP 1502, TP Licocene® PP 2602 and LLDPE Escorene LL-8460.29 were prepared and tested in sintering experiments.

Calculated sintering time by using an empirical model called First Order Response TP Licocene® PP 1502/LLDPE Escorene LL-8460.29 blends

| | |
|---|---|
| w5% TP Licocene® PP 1502 in dry blend | app. 850 sec |
| w5% TP Licocene® PP 1502 in melt blend | app. 720 sec |
| w10% TP Licocene® PP 1502 in dry blend | app. 440 sec |
| w10% TP Licocene® PP 1502 in melt blend | app. 700 sec |
| w25% TP Licocene® PP 1502 in dry blend | app. 380 sec |
| w25% TP Licocene® PP 1502 in melt blend | app. 410 sec |

Compared with

| | |
|---|---|
| Escorene LL-8460.29 | 720 sec |

Calculated sintering time by using an empirical model called First Order Response TP Licocene® PP 2602 / LLDPE Escorene LL-8460.29 blends

| | |
|---|---|
| w5% TP Licocene® PP 2602 in dry blend | app. 420 sec |
| w5% TP Licocene® PP 2602 in melt blend | app. 720 sec |
| w10% TP Licocene® PP 2602 in dry blend | app. 280 sec |
| w10% TP Licocene® PP 1502 in melt blend | app. 620 sec |
| w25% TP Licocene® PP 2602 in dry blend | app. 220 sec |
| w25% TP Licocene® PP 2602 in melt blend | app. 370 sec |

Compared with

| | |
|---|---|
| Escorene LL-8460.29 | 720 sec |

Increasing the TP Licocene® polymer weight percent from 5 up to 25 decreased the sintering time significantly (up to approximately 40%). The effect of TP Licocene® PP 1502 on the sintering time reduction was more pronounced in case of dry blending than in melt blending. The addition of TP Licocene® PP 2602 (in all weight %) showed significant sintering time reduction in both processes, the dry and the melt blending process. For example addition of 25 w% of TP Licocene® PP 2602 reduced the sintering time approximately up to 65%.

Rotational molding blends of TP Licocene® polymers and LLDPE Escorene LL-8460.29

Rotational molding experiments were carried out on the uniaxial rotomolding machine using the LPP and LLDPE dry blended samples (oven temperature was 406°C). Boxes were prepared successfully. The prepared molded parts showed opaque color and good thickness uniformity in both cases, blends prepared with TP Licocene® 1502 and TP Licocene® 2602.

## Claims

1. Rotational moulding process of low melt viscosity polymers or copolymers, wherein the polymers employed are propylene and/or ethylene polymers or copolymers with a melting point in the range from 50 to 160°C and a melt viscosity at 140 to 170°C in the range from 0.01 to 25 Pa.s.

2. Moulding process according to claim 1, wherein the polymers are used in form of regular sized pellets, preferably of a size of 1 to 4 mm in diameter.

3. Moulding process according to claim 1 or 2, wherein the low melt viscosity polymers are homopolymers of propylene, ethylene or copolymers of propylene and ethylene or copolymers of propylene or/and ethylene with one or more 1-olefin may be linear or branched, substituted or unsubstituted and have 4-18 carbon atoms are employed as modifiers for altering the processibility of the process.

4. Moulding process according to at least one of the preceding claims, wherein the total ethylene or propylene content is 60 to 99.9 % b.w.

5. Moulding process acording to at least one of the preceding claims, wherein the ethylene and propylene polymers have been prepared by metallocene catalysis using a chiral or nonchiral transition metal compound of the formula M1Lx.and wherein M1 is preferably an element of main group III, IV, V or VI of the Periodic Table of the Elements and Lx symbolizes the ligand.

6. Moulding process according to at least one of the preceding claims, wherein the low melt viscosity polymers or copolymers are incorporated to the rotational moulding process as powder, granules or in liquid form from a heated reservoir.

7. Moulding process according to at least one of the preceding claims, wherein the low melt viscosity polymer or copolymer comprises up to 99% by weight of another wax or resin, based on the total content.

8. Moulding process according to at least one of the preceding claims, wherein the low melt viscosity polymer or copolymer comprises one or more of the following additives:
a) up to 20% by weight of light stabilizers,
b) up to 20% by weight of an antioxidant,
c) up to 50% by weight of flame retardants,
d) up to 10% by weight of heat stabilizers,
e) up to 10% by weight of UV absorbers,
f) up to 10% by weight of antistatic,
g) up to 20% by weight of lubricants,
h) up to 50% by weight of a pulverulent filler insoluble in the metallocene polyolefin,
i) if appropriate, up to 50% by weight of a colorant substance, e.g. a pigment or a soluble dye
j) if appropriate, up to 10% by weight of processing aids and
k) if appropriate, up to 50% by weight of other active substances.
